# EUROPÄISCHE PATENTSCHRIFT

(11) **EP 2 178 710 B1**
(45) Veröffentlichungstag und Bekanntmachung des Hinweises auf die Patenterteilung: **18.11.2015**
(21) Anmeldenummer: 08787233.9
(22) Anmeldetag: 14.08.2008
(51) Int. Cl.: B60H 1/00

(54) **KLIMAGERÄT FÜR EINEN AUFBAU**
AIR CONDITIONER FOR A BUILT UP
APPAREIL DE CLIMATISATION POUR SUPERSTRUCTURE

(30) Priorität: 16.08.2007 DE 102007038716
(43) Veröffentlichungstag der Anmeldung: 28.04.2010
(73) Patentinhaber: Dometic Italy S.p.A., 47100 Forli (IT)
(72) Erfinder: FRANCINI, Vanes, I-47100 Forli (fc) (IT)
(74) Vertreter: Grosse, Felix Christopher
(86) Internationale Anmeldenummer: PCT/EP2008/060703
(87) Internationale Veröffentlichungsnummer: WO 2009/021994

(56) Entgegenhaltungen:
- EP-A- 0 733 503
- EP-A- 1 764 243
- WO-A-2006/021226
- DE-C1- 19 853 767
- US-A1- 2004 144 850

## Beschreibung

Die Erfindung bezieht sich auf ein Klimagerät für einen Außenaufbau eines Freizeitmobils, insbesondere eines Wohnmobils oder eines Bootes, und insbesondere ist es geeignet, auf einem Dach eines solchen Freizeitmobils angeordnet zu werden.

Insbesondere im Bereich größerer Aufbauten von mobilen Einheiten besteht ein großer Bedarf je nach Jahreszeit und Temperatur, den Innenraum des Aufbaus zu klimatisieren, das heißt ihn im Winter zu heizen und im Sommer zu kühlen. Ebenfalls sollte es möglich sein ihn ausreichend zu beleuchten. Aus dem Bereich der Campingmobile, wie Caravans und Wohnanhänger sind zum Beispiel Glaskuppel- Dachaufbauten bekannt. Diese können elektrisch betätigt werden, um geöffnet und geschlossen zu werden und weisen ein Fliegengitter oder eine Jalousie zum Sichtschutz bzw. zum Schutz vor Insekten auf. Die Anbringung einer solchen Glaskuppel durch Einbau in einem Ausschnitt des Dachs eines Freizeitmobils hat den Vorteil, dass eine Ausleuchtung des Aufbaus durch die transparente Glaskuppel leicht möglich ist, und dass durch eine variable Verstellung der Neigung der Glaskuppel auf dem Aufbau eine adäquate Belüftung des Innenraums des Aufbaus möglich ist.

Allerdings haben derartige aus dem Stand der Technik bekannte Glaskuppelaufbauten den Nachteil, dass sie im Bereich extremer Temperaturen abgesehen von einer ausreichenden Ausleuchtung des Innenraums des Aufbaus nicht für angemessen angenehme klimatische Bedingungen innerhalb des Aufbaus sorgen können, da sie lediglich eine geeignete Belüftung sicherstellen können. Häufig ist es deswegen wünschenswert, dass innerhalb des Aufbaus aus Komfortgründen oder wegen des Transports von empfindlichen Gütern bestimmte Temperaturbereiche eingehalten werden können.

In diesem Zusammenhang haben sich Aufbauklimaanlagen etabliert, mit denen der Innenraum eines Aufbaus angemessen klimatisiert werden kann. Beispielsweise ist aus WO 2006/021226 ein Verfahren zum Betrieb eines Klimagerätes sowie eine Vorrichtung bekannt. Mit einem derartigen Klimagerät, das nach Art eines Dachgepäckaufbaus auf dem Dach eines Fahrzeugs angebracht ist, kann der Innenraum je nach Bedarf angemessen klimatisiert werden. Das in WO 2006/021226 beschriebene Dachklimagerät hat zwei Luftkreisläufe. Ein erster Luftkreislauf dient der Kühlung des Innenraums, wobei der in diesem Bereich zirkulierende Luftstrom über einen Verdampfer abgekühlt wird. Ein zweiter Luftkreislauf dient der Kühlung des Kondensators, über den die dem Innenraum entzogene Wärme an die Außenluft abgegeben wird. Das Klimagerät desselben Anmelders kann im Austausch am Ort einer Glaskuppel ohne weitere bauliche Veränderungen des Aufbaus angebracht werden und kann so als Ersatz des Glaskuppeleinsatzes für bessere klimatische Bedingungen im Innenraum des Aufbaus sorgen. Außer der Anbringung von Steuerungs- und Versorgungsleitungen sind keine baulichen Maßnahmen erforderlich.

DE 19 853 767 offenbart eine Klimaanlage nach dem Oberbegriff des Anspruchs 1.

Derartige Klimageräte haben allerdings den Nachteil, dass beim Ausbau der Glaskuppel und dem Ersetzen des Glaskuppeleinsatzes durch das Klimagerät die bauartbedingten Vorteile der Glaskuppel verloren gehen. Das heißt Lichteinfall wird verhindert und es besteht keine Möglichkeit der Frischluftzufuhr am Ort der Klimaanlage. Demnach werden beim Stand der Technik die Vorteile der automatischen Klimatisierung durch Nachteile bei der Beleuchtung und bei der Frischluftzufuhr erkauft.

Der Erfindung liegt die Aufgabe zugrunde, ein Klimagerät für einen Aufbau anzugeben, das die Vorteile der Klimageräte aus dem Stand der Technik beibehält und sie dahingehend verbessert, dass sie die Nachteile vermeidet, die beim Ersetzen einer Glaskuppel mit dem Klimagerät auftreten.

Diese Aufgabe wird gemäß der Erfindung durch ein Klimagerät mit den Merkmalen des Patentanspruches 1 gelöst. Vorteilhafte Weiterbildungen der Erfindung ergeben sich aus den abhängigen Ansprüchen 2 bis 15.

Es handelt sich also um ein Klimagerät für einen Aufbau das im Bereich eines Ausschnitts des Aufbaus angeordnet ist, wobei das Klimagerät eine erste Gehäuseeinheit außerhalb des Aufbaus und eine zweite Gehäuseeinheit innerhalb des Aufbaus und einen Verbindungsabschnitt zur Verbindung der Gehäuseeinheiten im Bereich des Ausschnitts aufweist. Dies hat den Vorteil, dass das erfindungsgemäße Klimagerät ohne bauliche Veränderung an einem Ausschnitt anbringbar ist, an dem zuvor eine Glaskuppel befestigt war. Eine derartige Lösung ist technisch sehr einfach darstellbar, und stellt über den Verbindungsabschnitt sicher, dass sowohl eine mechanische Verbindung zwischen der ersten Gehäuseeinheit und der zweiten Gehäuseeinheit hergestellt werden kann, als auch, dass für benötigte Versorgungsleitungen ein Verlegungsraum geschaffen werden kann.

Zudem ist das Klimagerät so aufgebaut, dass es einen senkrechten Lichteinfall durch die Ausschnittsfläche in den Aufbau zulässt. Dies stellt sicher, dass trotz Einbau des Klimagerätes in den Ausschnitt weiterhin Licht in das Innere des Aufbaus fallen kann. Dazu besitzt das Klimagerät, das im Bereich eines Ausschnitts des Aufbaus angeordnet ist, zweckmäßigerweise bauliche Vorkehrungen, die am Ort des Ausschnitts, an dem das Klimagerät angebracht ist, den senkrechten Lichteinfall durch den Ausschnitt ungehindert ermöglichen. Bevorzugt ist an diesem Ort eine Öffnung vorgesehen, die in transparenter Weise das Licht passieren lässt.

Der Verbindungsabschnitt ist dabei so gestaltet, dass er den Ausschnitt einfasst und Teil einer Trägereinheit zur Befestigung des Klimagerätes am Aufbau ist. Auf der Trägereinheit sind mindestens ein Kondensator und ein Kompressor so angeordnet, dass sie sich außerhalb des Aufbaus und oberhalb des Ausschnitts befinden. Auf diese Weise wird sichergestellt, dass die durch die Außenluft zu kühlenden Teile des Klimagerätes sich unmittelbar in der Nachbarschaft der Außenluft befinden und die baulichen Maßnahmen für die notwendige Luftzufuhr einfach dargestellt werden können.

Weiterbildend sind der Kondensator und der Kompressor auf der Trägereinheit schräg oberhalb des Ausschnittes und bevorzugt neben dem Ausschnitt angeordnet, so dass ein möglichst ungehinderter Lichteinfall durch die Ausschnittsfläche ermöglicht wird.

Zweckmäßigerweise sind im Klimagerät Kondensator und Kompressor an unterschiedlichen, bevorzugt an sich gegenüberliegenden, Seiten des Ausschnitts auf der Trägereinheit angeordnet sind. Dieses Gruppieren um den Ausschnitt herum dient ebenfalls dem Zweck eine möglichst große Lichteintrittsöffnung beizubehalten bzw. zu erzeugen.

Besonders vorteilhaft sieht eine Weiterbildung des erfindungsgemäßen Klimagerätes es vor, dass 95% der Fläche des Ausschnittes für den Durchtritt von Licht genutzt werden können, während die restlichen 5% für Versorgungsleitungen des Klimagerätes nutzbar sind.

Besonders vorteilhaft ist im Bereich des Ausschnitts des Klimagerätes bei einer Weiterbildung des erfindungsgemäßen Klimagerätes eine Luke oder eine Kuppel vorgesehen, sodass vorteilhaft ein Klimagerät mit den Eigenschaften einer herkömmlichen Glaskuppel bereitgestellt wird.

Besonders vorteilhaft sieht es eine Weiterbildung des erfindungsgemäßen Klimagerätes vor, dass der Bereich der Ausschnittsfläche mit einer lichtundurchlässigen Jalousie verschlossen werden kann, oder dass dort ein Fliegengitter vorgezogen werden kann, sodass bei geöffneter Glaskuppel verhindert wird, dass Insekten in den Innenraum des Aufbaus eindringen können, bzw. dass ein optischer Schutz vor Einblick gewährt werden kann.

Besonders vorteilhaft sieht es eine Weiterbildung des erfindungsgemäßen Klimagerätes vor, dass die Jalousie bzw. das Fliegengitter aus dem Bereich des Ausschnitts automatisch wegfahrbar sind, sodass ein höchstmöglicher Komfort für Nutzer des Innenraums des Aufbaus gewährleistet werden kann.

Weiterhin sieht es eine Weiterbildung der erfindungsgemäßen Anordnung vorteilhaft vor, dass in der ersten Gehäuseeinheit ein Verdampfer angeordnet ist, und der Verbindungsabschnitt wenigstens einen Luftkanal aufweist. Diese Art der Bauweise gewährleistet vorteilhaft einen kompakten Aufbau des Klimagerätes, bei dem sichergestellt wird, dass alle funktionalen Komponenten, die zur Kühlung des Innenraumes und zur Abfuhr der Abwärme erforderlich sind, in einem Gehäuseteil angebracht sind und somit kompakt aufgebaut werden können. Über den Verbindungsabschnitt wird dann sichergestellt, dass die benötigten Luftzuführ- und Abluftkanäle für den Innenraum zu den Funktionskomponenten des Klimagerätes durchgeführt werden können. Der Verbindungsabschnitt kann in diesem Fall auch die Steuerungs- und Versorgungsleitungen aufnehmen.

Besonders vorteilhaft sieht es eine Weiterbildung des erfindungsgemäßen Klimagerätes vor, dass der zweite Gehäuseteil den Verdampfer aufnimmt, weil in diesem Fall lediglich Kühlmittelleitungen durch den Verbindungsabschnitt durchzuführen sind und somit der Ausschnitt in Bezug auf die Lichtdurchtrittsfläche vergrößert werden kann im Vergleich zu dem Fall, in dem Luftkanäle durch ihn durchgeführt werden müssen, weil der Verbindungsabschnitt hier kleiner ausfallen kann

Besonders vorteilhaft besitzt eine Weiterbildung des erfindungsgemäßen Klimagerätes in der zweiten Gehäuseeinheit mindestens eine Beleuchtungseinheit, weil auf diese Weise bei Dunkelheit ähnliche Beleuchtungsbedingungen darstellbar sind, wie in dem Fall, in dem durch den transparenten Bereich des Klimagerätes Licht einfällt. Ebenso wird auf diese Weise eine bereits vorhandene Versorgungsleitung des Klimagerätes auch für die Beleuchtung nutzbar.

Besonders vorteilhaft besitzt eine Weiterbildung des Klimagerätes in der zweiten Gehäuseeinheit wenigstens ein Anzeigeelement und/oder ein Steuerelement. Auf diese Weise sind alle für die Bedienung und Überwachung des Klimagerätes notwendigen Bestandteile in einer Gehäuseeinheit angeordnet.

Besonders vorteilhaft ist das Steuerelement in der zweiten Gehäuseeinheit als Fernsteuerelement ausgeführt, weil auf diese Weise ein erhöhter Komfort erzielt wird und über entsprechende Fernsteuerungseinrichtungen beispielsweise im Vorfeld einer Anreise ein Wohnmobil schon behaglich klimatisiert werden kann.

Besonders vorteilhaft ist die Fernsteuerung als Funkfernsteuerung nach dem ZigBee Standard ausgeführt, weil keine zusätzlichen Steuerungsleitungen für die Steuerung des Klimagerätes erforderlich sind und keine Sichtverbindung erforderlich ist.

Besonders vorteilhaft ist das Klimagerät im Bereich des Aufbaus eines Freizeitmobils angeordnet.

Weiterhin vorteilhaft ist der Aufbau des Freizeitmobils auf einem Boot angeordnet, weil dort ebenfalls Luken oder Kuppeleinsätze verwendet werden, welche vorteilhaft durch Klimaeinrichtungen ersetzt werden können.

Auf diese Weise wird das Klimagerät besonders vielseitig in vielen mobilen Einrichtungen anwendbar.

Im Folgenden wird die Erfindung anhand von Figuren und Ausführungsbeispielen weiter erläutert.
- Fig. 1: zeigt eine perspektivische Ansicht eines Klimagerätes auf einem Aufbau.
- Fig. 2: zeigt das Klimagerät aus Fig. 1, wobei die Abdeckung entfernt wurde.
- Fig. 3: zeigt eine Ansicht des Klimagerätes der Figuren 1 und 2, vom Inneren des Aufbaus.
- Die Fig. 4, 5: zeigen jeweils im Schnitt durch den Aufbau eine Seitenansicht des Klimagerätes und eine Vorderansicht des Klimagerätes der Figuren 1 bis 3.
- Fig. 6: zeigt einen Glaskuppeleinsatz aus dem Stand der Technik.
- Fig. 7: zeigt ein herkömmliches Dachklimagerät nach dem Stand der Technik.

Im Rahmen der Beschreibung des Klimagerätes werden die Bezugszeichen durch die Figuren hinweg gleichbedeutend verwendet.

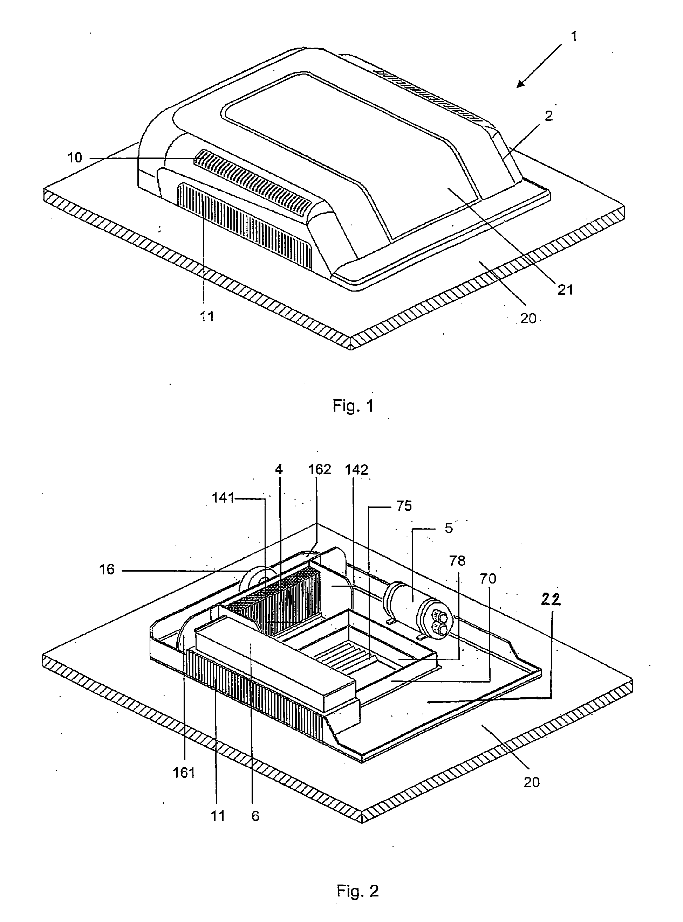

Wie Fig. 1 zeigt, ist das Klimagerät 1 gemäß einer Ausführungsform der Erfindung auf einer Außenoberfläche eines Aufbaus befestigt, der mit 20 bezeichnet ist. Dabei weist das Klimagerät 1 eine erste als Gehäuseabdeckung ausgeführte Gehäuseeinheit 2 auf, die auf einer Trägereinheit 22 befestigt ist. Die Gehäuseeinheit 2 überdeckt die Trägereinheit 22 also außen zumindest teilweise. In der perspektivischen Ansicht sind in der Gehäuseabdeckung 2 Belüftungsschlitze 10 und 11 zu erkennen, die jeweils der Zufuhr bzw. Abfuhr der Kühlluft dienen. Diese Kühlluft wird durch einen Kondensator geführt und an einem Kompressor vorbei, um das Innere des Gehäuses abzukühlen. Im Bereich des Kondensators können hierfür Gebläse vorgesehen sein (nicht gezeigt), die die Luft mit Unterdruck durch den Kondensator ziehen. Damit wird auch bewirkt, dass die Kühlluft durch den Belüftungsschlitz 10 in das Gehäuseinnere angesaugt wird. Das Gehäuse des Klimagerätes ist hier mit einer transparenten Abdeckung 21 ausgestattet, die beispielsweise auch als Klappe ausgeführt sein und schräg gestellt werden kann, um Luft durch eine Öffnung durchzulassen, welche in einem Ausschnitt des Aufbaus gebildet wird,.

In Fig. 2 ist das Innere der Ausführungsform des erfindungsgemäßen Klimagerätes aus Fig. 1 dargestellt, wobei die Darstellung in Fig. 2 das Klimagerät zeigt, bei dem die Gehäuseabdeckung 2 entfernt worden ist.

Insofern ist nun die die Trägereinheit 22 des Klimagerätes 1 zu erkennen. Über diese Trägereinheit 22 ist das Klimagerät 1 außen auf dem Aufbau befestigt. Auf der Trägereinheit 22 sind in dem hier gezeigten Ausführungsbeispiel die wesentlichen Funktionskomponenten des Klimagerätes angeordnet. Dies ist der Kompressor 5, der vorzugsweise als Rotationskompressor ausgeführt ist, der Kondensator 6 und der Verdampfer 4. Weiterhin weist die Trägereinheit 22 Trennwände 161, 162 und 142 auf, die der Stabilisierung und Luftführung dienen. Deutlich ist im Bereich des Ausschnitts eine Öffnung 78 zu erkennen, welche senkrecht auftreffendes Tageslicht nahezu vollständig durchlässt und die vom Verbindungsabschnitt 70 eingefasst wird. Ebenso ist eine Jalousie 75 dargestellt, mit der die Öffnung optisch dicht verschlossen werden kann. Anstelle dieser Jalousie oder zusätzlich zu dieser Jalousie kann ebenso ein bewegliches Fliegengitter vorgesehen sein, das bei geöffneter Lüftung verhindert, dass Insekten ins Innere des Aufbaus eindringen können. Weiterhin ist ein Gebläse 16 dargestellt, mit welchem Luft durch den Verdampfer gesaugt werden kann.

Ebenso ist in diesem Ausführungsbeispiel eine Luftzufuhr 141 dargestellt, womit dem Verdampfer Luft aus dem Inneren des Aufbaus zugeführt werden kann. Dabei ist besonders darauf zu achten, dass die kühlenden Komponenten 16 und 4 über die Trennwände 142 und 161 von den wärmeabführenden Komponenten 6 und 5 thermisch gut isoliert sind. Dies führt dazu, dass ein Luftstrom zu Kühlung des Innenraums sich nicht mit dem Luftstrom zur Kühlung des im Außenraum angeordneten Kondensators 6 und Kompressors 5 mischt. Ansonsten verschlechtert sich der Wirkungsgrad des Klimagerätes. Hierzu ist speziell im Bereich der Öffnung 78 sicherzustellen, dass diese mit dem Ausschnitt möglichst dicht abschließt. Dazu ist der Verbindungsabschnitt 70, der ein äußeres Gehäuseteil mit einem inneren Gehäuseteil des Klimagerätes verbindet, möglichst einstückig und luftdicht auszuführen.

Mittels der Lüftungskanäle, die bevorzugt im Bereich 141 vorgesehen sind, wird sowohl dem Inneren des Aufbaus Luft entnommen, als auch dem Inneren wiederum über Auslasskanäle gekühlte Luft zugeführt.

Für den äußeren Kühlkreislauf, welcher dem Kondensator Wärme entzieht und den Kompressor kühlt, können im Bereich der Lüftungsgitter 11 zusätzliche Gebläse vorgesehen sein, um die Luft am Kondensator vorbeizusaugen. Sie können diese beispielsweise durch den Lüftungsschlitz 10 ansaugen und im Inneren zirkulieren lassen. Dabei stellt der Verbindungsabschnitt 70 sicher, dass ebenso der Kompressor mit Frischluft gekühlt wird, weil er mit dem Ausschnitt und dem Gehäuse dicht abschließt. Dann wird die Luft aus dem Lüftungsgitter 11 ausgeblasen. Der Luftkreislauf, der die Luft im Inneren erwärmt oder abkühlt, eine Erwärmung kann beispielsweise durch eine elektrische Heizung im Bereich des Verdampfers 4 auf bekannte Weise durchgeführt werden, transportiert Luft aus dem Inneren, die durch das Gebläse 16 durch den Verdampfer 4 gesaugt wird und befördert gekühlte oder temperierte Luft wieder über geeignet angebrachte Lüftungskanäle im Bereich 141 wieder ins Innere des Aufbaus.

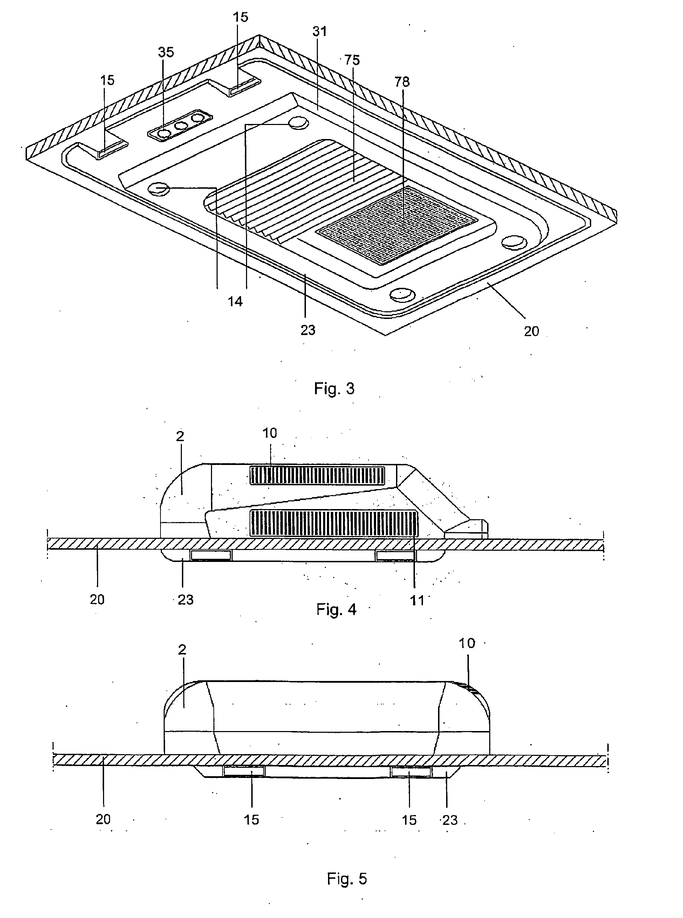

Wie Fig. 3 zeigt, ist eine zweite Gehäuseeinheit 23 im Inneren des Aufbaus angeordnet. Deutlich ist hier wieder die Öffnung 78 zu erkennen, die sowohl Tageslicht, das senkrecht auftrifft, durch den Ausschnitt im Aufbau passieren lässt, als auch auf Wunsch Frischluft. Ebenso ist im Inneren eine Jalousie bzw. ein Fliegengitter 75 zu erkennen. Deutlich sind hier ebenfalls Luftansaugöffnungen 14 dargestellt, über welche die zu temperierende Luft aus dem Inneren des Aufbaus abgesaugt wird, um sie dem Verdampfer 4 zuzuführen. Nachdem die Luft im Verdampfer bzw. in der dort vorhandenen Heizschlange temperiert wurde, wird sie mittels des Gebläses 16 wieder aus den Belüftungsöffnungen 15 ins Innere des Aufbaus ausgeblasen.

Speziell können alle dargestellten Komponenten des Klimagerätes fernbedient werden. Beispielsweise ist an der zweiten Gehäuseeinheit eine Anzeige mit Bedienungsvorrichtungen 35 vorgesehen. Mit dieser Anzeige kann ebenso eine Fernsteuerungseinheit gekoppelt sein, die beispielsweise nach dem Funkstandard ZigBee arbeitet, der besonders energiesparend ausgelegt ist und damit eine möglichst lange Batterielebensdauer der angeschlossenen Komponenten sicherstellt. Näheres dazu ist unter www.zigbee.org) dargelegt. Beispielsweise kann über eine derartige Fernbedienungseinrichtung bei der Anreise über eine geeignete Verbindung, beispielsweise über das Internet oder das Telefonnetz, das Klimagerät nach der Erfindung eingeschaltet werden und der Innere des Aufbaus auf eine gewünschte Temperatur gebracht werden. Ebenso sind beispielsweise die Belüftungskomponenten fernbedienbar. Das gleiche gilt auch für die Beleuchtungseinrichtungen 30, 31 und 32, die im Bereich der zweiten Gehäuseeinheit vorgesehen sind. Die Beleuchtungseinheiten haben besonders den Vorteil, dass sie im Inneren eine ähnliche Beleuchtungssituation schaffen wie bei Lichteinfall durch die Öffnung 78.

Bei der in den Fig. 1 bis 3 dargestellten Ausführungsform sind sämtliche Funktionskomponenten des Klimagerätes, bis auf die Bedieneinheit, innerhalb der ersten Gehäuseeinheit 2 auf der Trägereinheit 22 des Klimagerätes 1 angeordnet. Dies schafft optimale Voraussetzungen für einen kompakten Aufbau des Gerätes und verlegt die meisten Funktionskomponenten ins Äußere des Aufbaus, wodurch der Innenraum optimal genutzt werden kann. Allerdings bedingt es ein derartiger Aufbau, dass die Luft aus dem Innenraum nach außen geführt werden muss und die temperierte Luft aus dem Außenraum wieder nach innen geführt werden muss.

Falls dies nicht gewünscht wird, und um den Platz im Bereich des Ausschnittes 78 optimal nutzen zu können, kann der Verdampfer 4 zusammen mit dem Ventilator 16 im Inneren des Aufbaus angebracht werden, sodass dann lediglich die Kühlmittelleitungen vom Verdampfer zum Kompressor und vom Kondensator zurück zum Verdampfer durch den Verbindungsabschnitt im Bereich des Ausschnittes 78 zu führen sind. Selbstverständlich können im Bereich des Verbindungsabschnitts bevorzugt ebenso die Steuerungsleitungen, Leitungen für Sensoren, wie auch die Versorgungsleitungen für den Kompressor und eventuell vorhandene Gebläseeinrichtungen durchgeführt werden.

Das dargestellte Klimagerät hat den großen Vorteil, dass es den Nutzen einer Belüftungsund Beleuchtungsglaskuppel mit einer Klimatisierungseinrichtung, sowie Beleuchtungseinrichtungen in einer kompakten Einheit kombiniert. Ferner kann auf dem Wege eines einfachen Ersatzes ein Glaskuppeleinsatz durch ein erfindungsgemäßes Klimagerät ausgetauscht werden, weil die Komponenten des Klimagerätes kompakt um die Ausschnittsöffnung im Aufbau herum angeordnet sind.

Fig. 4 zeigt eine schematische Seitenansicht der Ausführungsform aus Fig. 1, bei der deutlich Belüftungsöffnungen 10 und 11 zu erkennen sind, die Gehäuseabdeckung 2, ein Schnitt durch eine Außenfläche 20 des Aufbaus und ebenso die zweite Gehäuseeinheit 23.

Fig. 5 zeigt die Ansicht aus Fig. 4 von vorne betrachtet, und deutlich sind im Inneren des Aufbaus Belüftungsausströmöffnungen für klimatisierte Luft 15 zu erkennen. Ebenso ist die Luftansaugöffnung für die Kühlluft des Kondensators 10 seitlich dargestellt. Deutlich ist zu erkennen, dass die zweite Gehäuseeinheit des Klimagerätes 23 im Inneren des Aufbaus nur wenig Platz einnimmt.

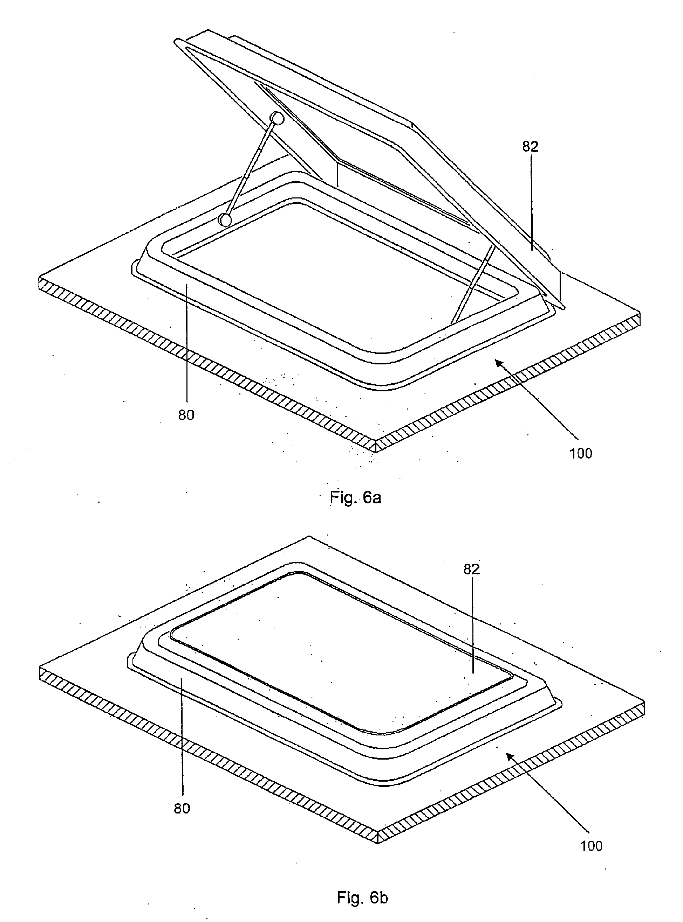

In Fig. 6a und 6b ist ein handelsüblicher Standard-Glaskuppeleinssatz 100 für Wohnmobile oder Caravans dargestellt. In Fig. 6a ist die Glaskuppel 82 geöffnet und deutlich ist der Rahmen 80 zu erkennen, der in einem Ausschnitt des Aufbaus sitzt. In Figur 6b ist die Glaskuppel 82 auf dem Rahmen 80 aufliegend und geschlossen dargestellt. Wenn das erfindungsgemäße Klimagerät anstatt eines bereits vorhandenen Glaskuppeleinsatzes zur Anwendung kommen soll, dann kann dieser einfach ausgebaut werden und das erfindungsgemäße Klimagerät kann in den vorhandenen Ausschnitt des Aufbaus eingesetzt werden. Bevorzugt kann im Bereich des Ausschnitts im Verbindungsabschnitt 70 eine starre Verbindung vorgenommen werden, sodass keine weiteren Befestigungsvorrichtungen erforderlich sind. Dann ist das Klimagerät über seine Trägereinheit 22 nur am Rand der Fensteröffnung 78 am Aufbau befestigt, wobei aber erfindungsgemäß sichergestellt ist, dass sehr wenig Fensterfläche lichtundurchlässig verbaut worden ist. Ebenso kann gegebenenfalls mit Saugnäpfen gearbeitet werden, welche die inneren und äußeren über den Ausschnitt überstehenden Teile des Klimagerätes am Aufbau sichern. Gegebenenfalls können auch dem Fachmann geläufige Klemm-, Spann- oder Schraubvorrichtungen oder andere Verbindungsvorrichtungen eingesetzt werden, um das Klimagerät am Aufbau zu sichern.

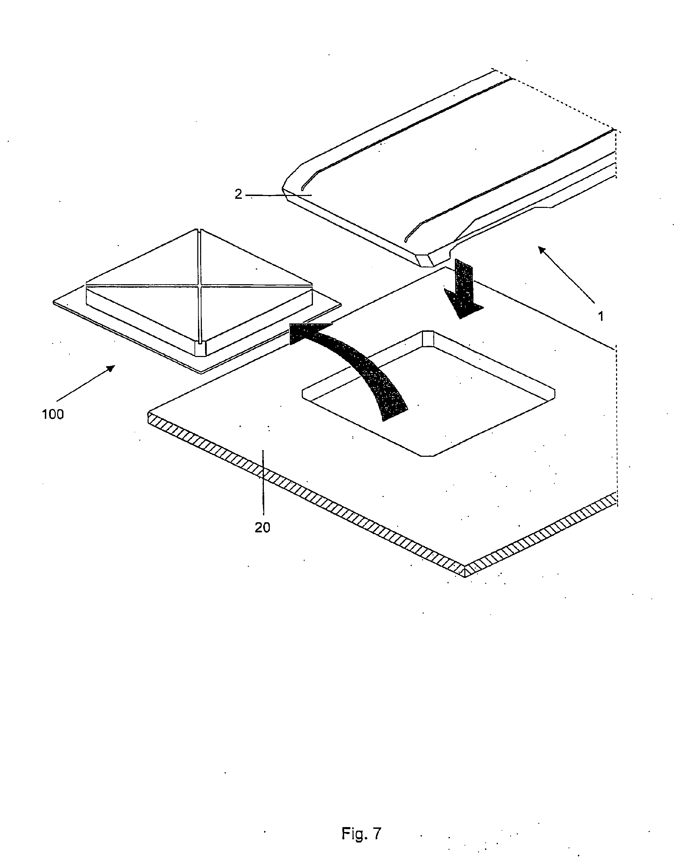

Die Tatsache dass sich das erfindungsgemäße Klimagerät problemlos in einen bereits vorhandenen vorher durch einen Glaskuppelaufsatz belegten Ausschnitt einsetzen lässt, erleichtert eine Kaufentscheidung, ermöglicht einen technisch problemlosen Betrieb und eine einfache Montage. Somit bietet das erfindungsgemäße Klimagerät große Vorteile gegenüber anderen Lösungen. Gleichzeitig bietet das erfindungsgemäße Klimagerät in Kombination alle Vorzüge wie ein zuvor vorhandener Glaskuppeleinsatz, indem auf Wunsch eine einfache Möglichkeit zur Lüftung, zur Beleuchtung und zur Abdunkelung geschaffen wird. Fig. 7 zeigt ein Beispiel eines Dachklimagerätes nach dem Stand der Technik. Beispielsweise wird dort ein Glaskuppeleinsatz 100 ausgebaut, und das Klimagerät 1 mit seiner Gehäuseoberschale 2 wird im Bereich der Außenhaut des Aufbaus 20 in die dadurch entstandene Öffnung eingesetzt, wie durch die Pfeile dargestellt. Dieses Klimagerät ist beispielsweise in der Veröffentlichung WO 2006/021226 näher beschrieben. Gegenüber der erfindungsgemäßen Lösung hat es den Nachteil, dass die Beleuchtungssituation und die Belüftungssituation im Vergleich zu einer Dachluke verschlechtert wird, wenn das Dachklimagerät im Austausch dazu eingebaut wird.

## Patentansprüche

1. Anordnung eines nachrüstbaren Klimageräts (1) an einem Außemaufban im Bereich eines Ausschnitts des Aufbaus (20) wobei das Klimagerät eine erste Gehäuseeinheit (2) außerhalb des Aufbaus (20) und eine zweite Gehäuseeinheit (23) innerhalb des Aufbaus aufweist, wobei das Klimagerät so aufgebaut ist, dass es einen senkrechten Lichteinfall durch die Ausschnittsfläche in den Aufbau zulässt wobei
das Klimagerät (1) einen Verbindungsabschnitt (70) zur Verbindung der Gehäuseeinheiten im Bereich des Ausschnitts (78) aufweist,
und der Verbindungsabschnitt (70) den Ausschnitt einfasst und Teil einer Trägereinheit (22) zur Befestigung des Klimagerätes (1) am Aufbau (20) ist,
**dadurch gekennzeichnet, dass** auf der Trägereinheit (22) mindestens ein Kondensator (6) und ein Kompressor (5) so angeordnet sind, dass sie sich außerhalb des Aufbaus und oberhalb neben dem Ausschnitt (78) befinden.

2. Anordnung nach Anspruch 1, bei dem Kondensator (6) und Kompressor (5) auf der Trägereinheit (22) schräg oberhalb des Ausschnittes (78) und bevorzugt neben dem Ausschnitt (78) angeordnet sind, so dass ein möglichst ungehinderter Lichteinfall durch die Ausschnittsfläche ermöglicht wird.

3. Anordnung nach Anspruch 1 oder 2, bei dem Kondensator (6) und Kompressor (5) an unterschiedlichen, bevorzugt an sich gegenüberliegenden, Seiten des Ausschnitts (78) auf der Trägereinheit (22) angeordnet sind.

4. Anordnung nach einem der vorangehenden Ansprüche, bei dem das Klimagerät einen Lichteinfall durch 95% der Ausschnittsfläche zulässt.

5. Anordnung nach einem der vorangehenden Ansprüche, bei dem im Bereich der Ausschnittsfläche eine zu öffnende transparente Luke oder Kuppel (21) angeordnet ist.

6. Anordnung nach einem der vorhergehenden Ansprüche, bei dem im Bereich der Ausschnittsfläche eine lichtundurchlässige Jalousie und/oder ein Fliegengitter (75) angeordnet sind.

7. Anordnung nach Anspruch 6, bei dem die Jalousie bzw. das Fliegengitter (75) aus dem Bereich des Ausschnitts (78) wegfahrbar sind.

8. Anordnung nach einem der vorhergehenden Ansprüche, bei dem in der ersten Gehäuseeinheit (2) auf der Trägereinheit (22) ein Verdampfer (4) angeordnet ist und der Verbindungsabschnitt wenigstens einen Luftkanal (141) aufweist.

9. Anordnung nach einem der vorhergehenden Ansprüche 1 bis 7, bei dem in der zweiten Gehäuseeinheit (23) ein Verdampfer angeordnet ist und der Verbindungsabschnitt (70) wenigstens einen Kühlmittelkanal aufweist.

10. Anordnung nach einem der vorhergehenden Ansprüche, bei dem in der zweiten Gehäuseeinheit (23) mindestens eine Beleuchtungseinrichtung (30, 31, 32) für das Innere des Aufbaus angeordnet ist.

11. Anordnung nach einem der vorhergehenden Ansprüche, bei dem in der zweiten Gehäuseeinheit (23) mindestens ein Steuer-/ und/oder Anzeigeelement (35) angeordnet ist.

12. Anordnung nach Anspruch 11, bei dem das Steuerelement (35) ein Fernsteuerelement ist.

13. Anordnung nach Anspruch 12, bei dem das Fernsteuerungselement eine Funkfernsteuerung ist, die nach dem Zigbee Standard arbeitet.

14. Anordnung nach einem der vorhergehenden Ansprüche, bei dem der Aufbau (20) ein Freizeitmobilaufbau ist.

15. Anordnung nach einem der Ansprüche 1 bis 13, bei dem der Aufbau (20) ein Bootsaufbau ist.

## Claims

1. Arrangement of a retrofittable air conditioning unit (1) on an external superstructure in the area of a cutout of the superstructure (20), wherein the air conditioning unit has a first housing unit (2) outside the superstructure (20) and a second housing unit (23) inside the superstructure, wherein the air conditioning unit is constructed so that it permits a vertical incidence of light through the cutout area into the superstructure, wherein the air conditioning unit (1) has a connecting section (70) for connecting the housing units in the region of the cutout (78), and the connecting section (70) borders the cutout and is part of a carrier unit (22) for attaching the air conditioning unit (1) to the superstructure (20), **characterised by** that at least one condenser (6) and one compressor (5) are arranged on the carrier unit (22) in such a way that they are located outside the superstructure and above adjacent to the cutout (78).

2. Arrangement according to claim 1, in which condenser (6) and compressor (5) are arranged on the carrier unit (22) at an angle above the cutout (78) and preferably adjacent to the cutout (78), so that an incidence of light that is as unobstructed as possible is facilitated through the cutout area.

3. Arrangement according to claim 1 or 2, in which condenser (6) and compressor (5) are arranged on the carrier unit (22) on different, preferably opposite, sides of the cutout (78).

4. Arrangement according to one of the preceding claims, in which the air conditioning unit permits an incidence of light through 95% of the cutout area.

5. Arrangement according to one of the preceding claims, in which a transparent hatch or dome (21) to be opened is arranged in the region of the cutout area.

6. Arrangement according to one of the preceding claims, in which an opaque blind and/or a fly screen (75) is/are arranged in the region of the cutout area.

7. Arrangement according to claim 6, in which the blind and the fly screen (75) can be moved away from the region of the cutout (78).

8. Arrangement according to one of the preceding claims, in which an evaporator (4) is arranged in the first housing unit (2) on the carrier unit (22) and the connecting section has at least one air duct (141).

9. Arrangement according to one of the preceding claims 1 to 7, in which an evaporator is arranged in the second housing unit (23) and the connecting section (70) has at least one coolant duct.

10. Arrangement according to one of the preceding claims, in which at least one lighting device (30, 31, 32) for the interior of the superstructure is arranged in the second housing unit (23).

11. Arrangement according to one of the preceding claims, in which at least one control and/or display element (35) is arranged in the second housing unit (23).

12. Arrangement according to claim 11, in which the control element (35) is a remote control element.

13. Arrangement according to claim 12, in which the remote control element is a radio remote control, which operates according to the ZigBee standard.

14. Arrangement according to one of the preceding claims, in which the superstructure (20) is a recreational vehicle superstructure.

15. Arrangement according to one of claims 1 to 13, in which the superstructure (20) is a boat superstructure.

## Revendications

1. Agencement d'un appareil de climatisation (1) pouvant être monté a posteriori sur une superstructure extérieure dans la zone d'une découpe de la superstructure (20), l'appareil de climatisation comportant une première unité de boîtier (2) en dehors de la superstructure (20) et une seconde unité de boîtier (23) à l'intérieur de la superstructure, l'appareil de climatisation étant construit de telle manière qu'il autorise une incidence verticale de la lumière à travers la surface de découpe dans la superstructure, l'appareil de climatisation (1) comportant une partie de raccordement (70) pour raccorder les unités de boîtier dans la zone de la découpe (78),
et la partie de raccordement (70) entourant la découpe et faisant partie d'une unité de support (22) pour fixer l'appareil de climatisation (1) sur la superstructure (20),
**caractérisé**
**en ce qu'**au moins un condenseur (6) et un compresseur (5) sont agencés de telle manière sur l'unité de support (22) qu'ils se trouvent en dehors de la superstructure et au-dessus à côté de la découpe (78).

2. Agencement selon la revendication 1, dans lequel le condenseur (6) et le compresseur (5) sont agencés sur l'unité de support (22) en biais au-dessus de la découpe (78) et de préférence à côté de la découpe (78), de telle manière qu'une incidence de la lumière la moins entravée possible à travers la surface de découpe est rendue possible.

3. Agencement selon la revendication 1 ou 2, dans lequel le condenseur (6) et le compresseur (5) sont agencés sur des côtés différents, de préférence opposés, de la découpe (78) sur l'unité de support (22).

4. Agencement selon l'une des revendications précédentes, dans lequel l'appareil de climatisation autorise une incidence de la lumière à travers 95 % de la surface de découpe.

5. Agencement selon l'une des revendications précédentes, dans lequel une lucarne ou coupole (21) transparente pouvant être ouverte est agencée dans la zone de la surface de découpe.

6. Agencement selon l'une des revendications précédentes, dans lequel une persienne et/ou une moustiquaire (75) opaque est agencée dans la zone de la surface de découpe.

7. Agencement selon la revendication 6, dans lequel la persienne et/ou la moustiquaire (75) sont déplaçables hors de la zone de la découpe (78).

8. Agencement selon l'une des revendications précédentes, dans lequel un évaporateur (4) est agencé dans la première unité de boîtier (2) sur l'unité de support (22) et la partie de raccordement comporte au moins un conduit d'air (141).

9. Agencement selon l'une des revendications précédentes 1 à 7, dans lequel un évaporateur est agencé dans la seconde unité de boîtier (23) et la partie de raccordement (70) comporte au moins un conduit de réfrigérant.

10. Agencement selon l'une des revendications précédentes, dans lequel au moins un dispositif d'éclairage (30, 31, 32) est agencé dans la seconde unité de boîtier (23) pour l'intérieur de la superstructure.

11. Agencement selon l'une des revendications précédentes, dans lequel au moins un élément de commande et/ou d'affichage (35) est agencé dans la seconde unité de boîtier (23).

12. Agencement selon la revendication 11, dans lequel l'élément de commande (35) est un élément de commande à distance.

13. Agencement selon la revendication 12, dans lequel l'élément de commande à distance est une radiotélécommande qui fonctionne selon la norme Zigbee.

14. Agencement selon l'une des revendications précédentes, dans lequel la superstructure (20) est une superstructure de véhicule récréatif.

15. Agencement selon l'une des revendications 1 à 13, dans lequel la superstructure (20) est une superstructure de bateau.
